# EUROPÄISCHE PATENTANMELDUNG

(11) **EP 1 577 579 A1**
(43) Veröffentlichungstag der Anmeldung: **21.09.2005**
(21) Anmeldenummer: 05003016.2
(22) Anmeldetag: 12.02.2005
(51) Int. Cl.: F16D 65/12, B60T 1/06, B60K 17/04

(54) **Lamellenbremse für ein Fahrzeuggetriebe**

(30) Priorität: 18.03.2004 DE 102004013301
(71) Anmelder: ZF FRIEDRICHSHAFEN AG, 88038 Friedrichshafen (DE)
(72) Erfinder: Sonnleitner, Hermann, 94051 Hauzenberg (DE)

(57) **Zusammenfassung**

Eine Lamellenbremse für ein Fahrzeuggetriebe, insbesondere ein Endgetriebe einer Antriebsachse eines Mobil-Baggers, weist Lamellen auf, welche drehfest, jedoch axial verschiebbar, in ihrem Bauteil gehalten sind, indem die Lamellen Laschen (2) aufweisen, deren Flanken (3, 4) nahezu parallel angeordnet sind und in Ausnehmungen (8) eingreifen, welche so ausgeführt sind, dass das Spiel zwischen den Laschen (2) und den Ausnehmungen (8) gering gehalten werden kann.

## Beschreibung

Die Erfindung betrifft eine Lamellenbremse für ein Fahrzeuggetriebe nach der im Oberbegriff von Anspruch 1 näher definierten Art.

Lamellenbremsen für Fahrzeuggetriebe werden insbesondere zum Reduzieren der Fahrgeschwindigkeit bei Mobil-Fahrzeugen verwendet und sind vorzugsweise in den Endgetrieben von Achsen angeordnet. Insbesondere bei Arbeitsmaschinen, wie beispielsweise Mobil-Baggern, ist es wesentlich, dass bei geschlossener Lamellenbremse das Fahrzeug stillsteht, da sonst, beispielsweise bei einem Baggervorgang eines Mobil-Baggers, sicherheitskritische Situationen entstehen können.

Aus diesem Grund werden Lamellenbremsen so angeordnet, dass der Abtrieb, welcher mit einem Fahrzeugrad verbunden ist, über die Lamellenbremse direkt mit einem ortsfesten Gehäuse gehalten werden kann.

Die EP 0 928 253 B1, die EP 0 979 365 B1 und die EP 1 234 993 A1 offenbaren eine Lamellenbremse für ein Fahrzeuggetriebe, deren innere Lamellen drehfest, jedoch axial verschiebbar, mit dem Planetenträger, welcher mit dem Abtrieb verbunden ist, verbunden sind und deren äußere Lamellen drehfest, jedoch axial verschiebbar, mit dem ortsfesten Gehäuse verbunden sind. Die Verbindungen der Lamellen mit dem Gehäuse oder dem Planetenträger sind entweder als Verzahnungsverbindungen oder als Kreisbogenverbindungen offenbart. Diese Verbindungen sind jedoch nur wirtschaftlich herstellbar wenn ein Spiel zwischen der Verzahnung der Lamelle und der Verzahnung des zu verbindenden Bauteils eingehalten wird. Durch dieses Spiel bewegt sich jedoch das Arbeitsfahrzeug, beispielsweise der Mobil-Bagger, bei seinem Einsatz auch im gebremsten Zustand.

Der vorliegenden Erfindung liegt die Aufgabe zugrunde, eine Lamellenbremse für ein Fahrzeuggetriebe zu schaffen, welche wirtschaftlich herstellbar ist und im geschlossenen Zustand das Fahrzeug sicher im Stillstand hält.

Die Aufgabe wird mit einer, auch die kennzeichnenden Merkmale des Hauptanspruchs aufweisenden, gattungsgemäßen Lamellenbremse gelöst.

Erfindungsgemäß sind innere und äußere Lamellen drehfest, jedoch axial verschiebbar, mit Bauteilen verbunden. Diese Verbindung besteht aus mindestens einer Lasche, deren Flanken nahezu parallel ausgeführt sind. Diese Laschen greifen in Ausnehmungen ein, deren Wände so ausgeführt sind, dass die Flanken der Lasche nahezu spielfrei an den Wänden der Ausnehmungen anliegen. Vorzugsweise ist mindestens eine Lasche an einer Außenlamelle angeordnet, wobei die Innenlamelle über eine Mitnahmeverzahnung, deren Spiel eingeschränkt ist, mit dem Bauteil verbunden sein kann. Es besteht jedoch auch die Möglichkeit, die Innen- sowie die Außenlamelle mit jeweils mindestens einer Lasche drehfest in den Bauteilen zu halten.

In einer weiteren Ausgestaltungsform sind mehrere Laschen am Umfang der Lamellen gleichmäßig verteilt angeordnet.

In einer weiteren Ausgestaltungsform der Erfindung ist der Übergang der Flanken der Lasche in die radiale Begrenzung der Lamelle so ausgebildet, dass an dieser Stelle eine Ausnehmung angeordnet ist, welche die Kerbspannungen reduziert und einen Kühlflüssigkeitsstrom zuläßt.

In einer weiteren Ausgestaltungsform sind die Lamellen der Lamellenbremse in einem Fahrzeuggetriebe, wie in der EP 1 234 993 A1 oder der EP 0 979 365 B1 oder der EP 0 928 253 B1 angeordnet, deren Offenbarung hiermit vollständig mitumfaßt sein soll.

Weitere Merkmale sind der Figuren-Beschreibung zu entnehmen.

### Es zeigen:

- Fig. 1: eine schematisch dargestellte Außenlamelle und
- Fig. 2: das Verbindungsbauteil zur Außenlamelle.

### Fig. 1:

Am Umfang der Außenlamelle 1 sind mehrere Laschen 2 gleichmäßig verteilt angeordnet. Die Laschen 2 weisen eine erste Flanke 3 und eine zweite Flanke 4 auf, welche nahezu parallel angeordnet sind. An der Stelle, an welcher die Flanken 3 und 4 in die äußere Umrandung 5 der Außenlamelle 1 übergehen, sind Ausnehmungen 6 angeordnet, welche so ausgeführt sind, dass die Kerbspannung reduziert wird und ein Kühlmitteldurchfluß durch das Lamellenpaket möglich ist.

### Fig. 2:

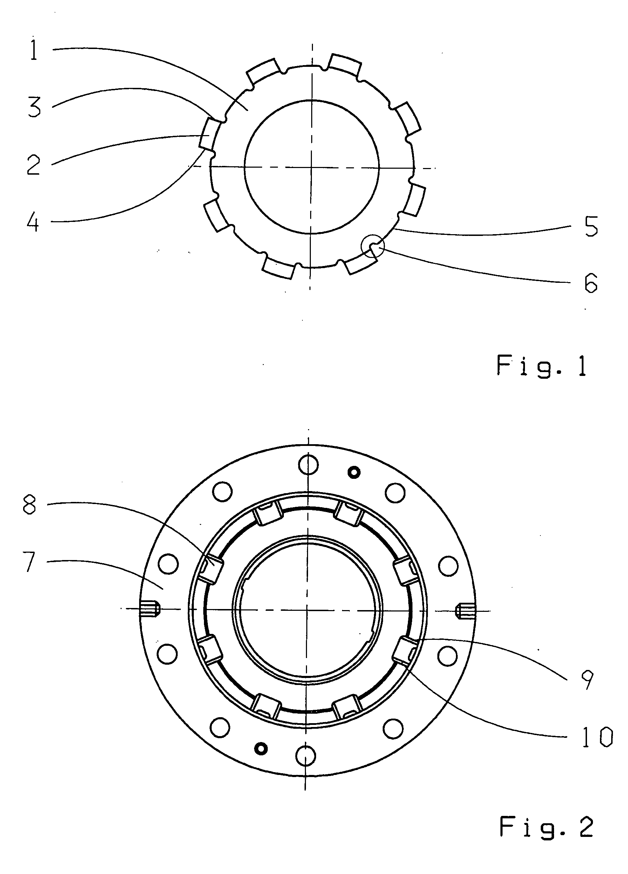

Im Gehäusebauteil 7 sind gleichmäßig verteilte Ausnehmungen 8 angeordnet, deren Wände 9 und 10 so ausgeführt sind, dass ein möglichst geringes Spiel beim Einbau der Lamelle nach Fig. 1 vorhanden ist.

Indem die erste Flanke 3 und die zweite Flanke 4 der Lamelle in Fig. 1 nahezu parallel angeordnet sind, sind sowohl die Lamellen als auch die Ausnehmungen 8 kostengünstig herzustellen, wobei ein äußerst geringes Spiel verwirklicht werden kann, wodurch Relativbewegungen des Fahrzeugs verhindert werden können.

### Bezugszeichen

- 1: Außenlamelle
- 2: Lasche
- 3: erste Flanke
- 4: zweite Flanke
- 5: äußere Umrandung
- 6: Ausnehmungen
- 7: Gehäusebauteil
- 8: Ausnehmungen
- 9: Wände
- 10: Wände

## Patentansprüche

1. Lamellenbremse für ein Fahrzeuggetriebe, wobei innere Lamellen drehfest, jedoch axial verschiebbar, mit einem ersten Bauteil und äußere Lamellen (1) drehfest, jedoch axial verschiebbar, mit einem zweiten Bauteil (7) in Verbindung stehen und wobei die Lamellenbremse von einer Betätigungseinrichtung im Schließ- und Öffnungssinne betätigbar und bei im Schließsinne betätigter Lamellenbremse ein Abtrieb des Fahrzeuggetriebes mit einem ortsfesten Gehäuse (7) verbunden ist, **dadurch gekennzeichnet, dass** mindestens eine drehfeste, jedoch axial verschiebbare Verbindung aus mindestens einer radial nach außen weisenden Lasche (2) einer Lamelle besteht, welche nahezu parallele Flanken (4, 5) aufweist, welche in mindestens eine Ausnehmung (8) des Bauteils (7) eingreift, wobei die Ausnehmung (8) Wände (9,10) aufweist, welche so geformt sind, dass die Flanken (4, 5) nahezu spielfrei an den Wänden (9, 10) der Ausnehmung (8) anliegen.

2. Lamellenbremse nach Anspruch 1, **dadurch gekennzeich** - **net , dass** die Lamellenbremse zwischen einem Abtrieb und einem Untersetzungsgetriebe angeordnet ist und den Abtrieb vor dem Untersetzungsgetriebe mit dem Gehäuse verbindet.

3. Lamellenbremse nach Anspruch 1, **dadurch gekennzeich** - **net , dass** die inneren Lamellen mit dem Abtrieb und die äußeren Lamellen (1) mit dem Gehäuse in Verbindung stehen.

4. Lamellenbremse nach Anspruch 1, **dadurch gekennzeich** - **net , dass** die Ausnehmung (8) in einem Bauteil des Gehäuses (7) angeordnet ist.

5. Lamellenbremse nach Anspruch 1, **dadurch gekennzeich** - **net , dass** die mindestens eine Lasche (2) an der äußeren Lamelle (1) angeordnet ist.

6. Lamellenbremse nach Anspruch 1, **dadurch gekennzeich** - **net , dass** der Übergang der Flanke (3, 4) der Lasche (2) in die radiale Begrenzung (5) der Lamelle (1) mit einer Ausnehmung (6) ausgebildet ist, welche eine Kerbspannung reduziert und einen Kühlflüssigkeitsstrom zuläßt.

7. Lamellenbremse nach Anspruch 1, **dadurch gekennzeich - net , dass** die Wände (9, 10) der Ausnehmung (8) nahezu parallel ausgeführt sind.

8. Lamellenbremse nach Anspruch 1, **dadurch gekennzeich** - **net , dass** das Untersetzungsgetriebe ein Planetengetriebe ist, bei welchem der Planetenträger mit den inneren Lamellen und dem Abtrieb verbunden ist, und die äußeren Lamellen mit dem Gehäuse verbunden sind.
